# EUROPEAN PATENT SPECIFICATION

(11) **EP 1 489 439 B1**
(45) Date of publication and mention of the grant of the patent: **04.04.2007**
(21) Application number: 04022149.1
(22) Date of filing: 29.10.1999
(51) Int. Cl.: G02B 5/128

(54) **Method of making a retroreflective sheeting containing a validation image**
Verfahren zur Herstellung einer retroreflektierenden Folie mit einem Bild zur Echtheitsprüfung
Méthode de fabrication d'une feuille retroréfléchissante possedant une image de validation

(30) Priority: 30.10.1998 US 106359 P
(43) Date of publication of application: 22.12.2004
(62) Divisional of application: 99308606.5
(73) Proprietor: AVERY DENNISON CORPORATION, Pasadena, CA 91103 (US)
(72) Inventor: Hannington, Michael, Madison, Ohio 44057 (US); Newell, Bruce, Painesville Ohio 44077 (US)
(74) Representative: Clyde-Watson, Zöe

(56) References cited:
- WO-A-98/04419
- WO-A-98/26313
- US-A- 5 656 360

## Description

### Cross Reference to Provisional Application

This application claims priority from US provisional application Serial No. 60/106,359, filed October 30, 1998.

### Field of the Invention

The present invention relates to a method of making a retroreflective sheeting with an image, more specifically a validation image.

### Background of the Invention

Validation images have been used for years for authentication and security purposes. A watermark is an identifying pattern or legend either on or in a material to provide validation of the material. Retroreflective sheeting with directional and non-directional watermarks have been used as a validation means for documents, phonographs, cassette tapes, compact disk containers, traffic signage and license plates.

One problem with watermarks on retroreflective material is providing the watermark in a manner which provides the needed authentication but which provides some subtlety or inconspiciousness, such as being discernable in only a few angles of viewing. Often expensive processing steps and equipment are required to provide such a watermark. Additionally, there is generally little processing control over the conspiciousness or intensity of the watermark.

It is desirable to have an image which is distinct and viewable for authenticating purposes. Further, it is desirable to have a processing means to provide the desired intensity of the image. Finally, it is also desirable to have an image which may be subtle and directional.

### Summary of the Invention

This invention relates to a method of making a retroreflective sheeting which has an image, such as a validation image according to claim 1.

### Brief Description of the Drawings

Fig. 1 is a cross sectional view of a retroreflective sheeting.
Fig. 2 is a cross sectional view of a retroreflective sheeting.
Fig. 3 is a cross sectional view of a retroreflective sheeting.
Fig. 4 is an illustration of the method of imparting the image.
Fig. 5 is an illustration of an alternative method of imparting the image.
Fig. 6 is an illustration of an another alternative method of imparting the image.

### Description of the Preferred Embodiments

As described herein, the invention relates to a method of making a retroreflective sheeting which has an image. The image is a portion of the reflective layer which does not conform, or is less conforming to the back surface of the microsphere lenses. The portion of the reflective layer, which is out of conformity, does not provide the same magnitude of retroreflectivity as the conforming areas. This non-conforming area can range from a "dead" or nonreflecting, to a less reflecting portion, to a greater reflecting portion of the retroreflective sheeting. This difference in reflective characteristic leads to the image's viewability. The apparent intensity of the image is related to the degree of non-conformity of the spacing and/or the reflective layers.

As described above the retroreflective sheeting has a layer of transparent microsphere lenses. The microsphere lenses may have any refractive index or average diameter provided that the beads provide the necessary refraction for the retroreflective application. Typically the microsphere lenses are characterized as having an average refractive index in the range of about 1.8 to about 2.5, or from about 1.9 to about 2.4, or from about 2.1 to about 2.3 and an average diameter of about 35 to about 100, or from about 45 to about 90, or from about 55 to about 80 micrometers. Here and elsewhere in the specification and claims the range and ratio limits may be combined. The transparent microsphere lenses utilized in the retroreflective sheeting of the present invention may be characterized as having average diameters in a range of from about 25 to about 300, 30 to about 120 micrometers, and more often in a range from about 40 to about 80 micrometers. The index of refraction of the microsphere lenses is generally in the range from about 1.9 to about 2.5, more typically is in the range from about 2.0 to about 2.3, and most often between about 2.10 to about 2.2.

Glass microspheres are typically used although ceramic microspheres such as those made by sol/gel techniques can also be used. The index of refraction and the average diameter of the microspheres, and the index of refraction of the topcoat and/or cover sheet and space coat dictate the thickness of the spacing film. The microspheres can be subjected to chemical or physical treatments to improve the bond of the microspheres to the polymeric films. For example, the microspheres can be treated with a fluorocarbon or an adhesion promoting agent such as an aminosilane to improve the bond, or the space coat layer in which the lenses have been embedded can be subjected to a flame treatment or corona discharge to improve the bond between the space coat and lenses to the subsequently applied topcoat and or cover sheet.

The retroreflective sheeting also has a spacing layer generally conforming to the bottom surface of the microsphere lenses. The thickness of the polymeric spacing layer or space coat is from about 25% to about 100%, or from 40% to about 60% of the average diameter of the microsphere lenses. Various thermoplastic polymeric resins have been used previously in forming the spacing layer of embedded lens retroreflective sheeting and such resins can be used in the sheeting of the present invention. The resins that may be used for the spacing layer include a variety of partially amorphous or semi-crystalline thermoplastic polymers which generally have a soft stage during which the lenses can be embedded in the films. The material used to form the spacing film or layer should be compatible with the topcoat material and adapted to form a good bond with the topcoat (and the microsphere lenses). Preferably, the adhesion between the materials is greater than the tensile strength of the materials. Acrylics, polyvinyl butyrals, aliphatic urethanes and polyesters are particularly useful polymer materials because of their outdoor stability. Copolymers of ethylene and an acrylic acid or methacrylic acid; vinyls, fluoropolymers, polyethylenes, cellulose acetate butyrate, polycarbonates and polyacrylates are other examples of polymers that can be used for the topcoat and spacing layers of the sheeting of the invention. It is desirable to use materials having elastomeric properties to provide retroreflective sheeting which may be repeatedly stretched or flexed, and upon release of the stretching or flexing tension, rapidly return to substantially their original dimensions without significant loss of retroreflectivity. Polyurethanes are available which possess such elastomeric properties and these materials can be used as space coat materials.

It is desirable to use two or more layers to form a topcoat / cover sheet layer. These may consist of any of the aforementioned materials in combination with a transparent pressure sensitive adhesive (such as AS352RX acrylic adhesive from Avery Chemical in Mill Hall Pennsylvania) underlying the cover sheet and in intimate contact and conforming to the microspheres. The cover sheet or pressure sensitive adhesive can be colored with a transparent pigment or dye or even be printed with a graphic which can be located on the interior or the exterior of the cover sheet. The pressure sensitive adhesive can be replaced by a thermal bonding layer, a heat activated adhesive, or a material which forms chemical bonds to the cover sheet.

The retroreflective sheeting has a topcoat or cover sheet overlying and conforming to the top surface of the microsphere lenses. The coating weight of the topcoat may range from about 25 to 175 gms/m². Preferably the coating weight is about 50 to 150 gms/m² and more preferably is from about 60 to 120 gms/m². The topcoat thickness may range from 25 to about 125 micrometers and more often is from about 50-100 micrometers.

The cover may comprise various thermoplastic polymers including acrylic polymer such as polymethylmethacrylate, vinyl polymers such as PVC and vinyl acrylic copolymers, or polyurethanes such as aliphatic polyether urethanes. Cover sheets include an impact modified polymethylmethacrylate (PMMA) (e.g., Plexiglas^{™} acrylic DR, MI-7 (Rohm & Haas), Perspex^{™} acrylic HI-7 (ICI), or blends thereof), a vinyl acrylic formulation (methyl methacrylate/ butyl methacrylate) copolymer and a PVC homopolymer) or a polyurethane. The aliphatic polyurethane cover sheet is produced by casting the urethane onto a polymer coated paper casting sheet or onto a polymer casting sheet. Casting sheet products are well known to the industry and supplied by companies such as Felix Schoeller Technical Papers, Pulaski, N.Y., S.D. Warren of Newton Center, Massachusetts and lvex Corporation of Troy, Ohio. The urethane coating is coated onto the casting sheet by standard coating methods such as curtain coating, slot die coating, reverse roll coating, knife over roll coating, air knife coating, gravure coating, reverse gravure coating, offset gravure coating, Meyer rod coating, etc. To achieve proper performance and coat weight thickness in each of the coating operations, technical expertise is applied to determine the optimal urethane solution viscosity. The application of these coating techniques is well known in the industry and can effectively be implemented by one skilled in the art. The knowledge and expertise of the manufacturing facility applying the coating determine the preferred method. Further information on coating methods can be found in "Modern Coating and Drying Technology", by Edward Cohen and Edgar Gutoff, VCH Publishers, Inc., 1992. Extrusion or extrusion coating are alternate methods of forming a urethane film.

The retroreflective sheeting, may also include a pressure sensitive adhesive and optionally a release liner. For example, an adhesive layer can be applied over the reflective layer to protect the reflective layer and to serve a functional purpose such as adhering the sheeting to a substrate. Conventional pressure-sensitive adhesives such as acrylic-based adhesives, or heat- or solvent-activated adhesives are typically used and may be applied by conventional procedures. For example, a preformed layer of adhesive on a carrier web or release liner can be laminated to the reflective layer. Conventional release liners can be utilized in the formation of the retroreflective sheeting of the present invention.

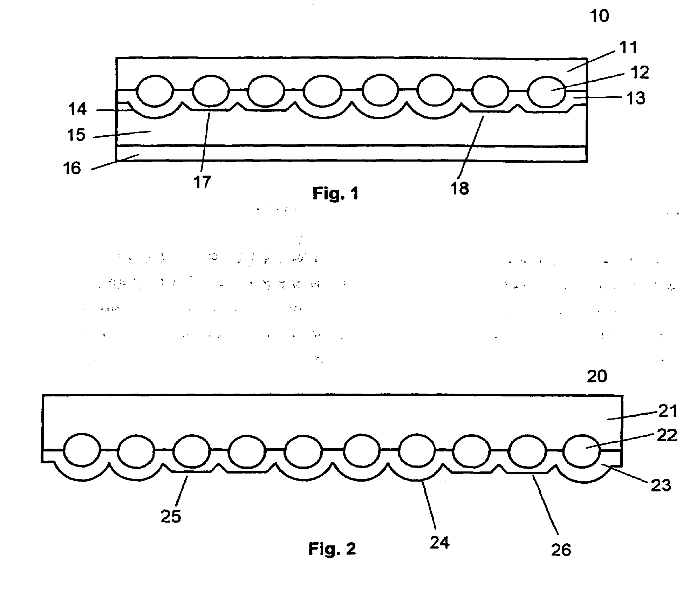

The retroreflective sheeting is further illustrated in reference to the drawings. In Fig. 1, retroreflective sheeting 10 has a cover sheet, e.g. a polyurethane 11, in which are embedded glass microspheres 12. The glass microspheres are also adhered to spacecoat, e.g. polyvinylbutyral, 13. Reflecting surface (vapor deposited aluminum) 14 is attached to spacecoat 13. A pressure sensitive adhesive 15 and release liner 16 are adhered to reflecting surface 14. Images 17 and 18 are portions of the reflective and spacecoat layers which are non-conforming to the glass beads 12.

Fig. 2 illustrates a retroreflective sheeting which does not have a pressure sensitive adhesive. Retroreflective sheeting 20 has cover sheet 21 attached to glass microspheres 22, which are also attached to spacecoat 23. A reflecting surface 24 is on spacecoat 23. Images 25 and 26 are non-conforming sections of the reflective and spacecoat layers 23 and 24.

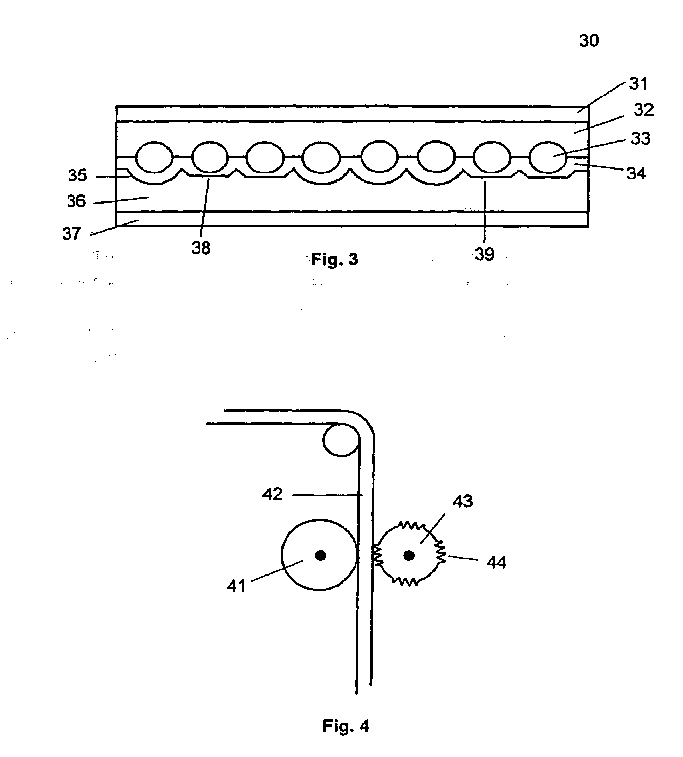

Fig. 3 illustrates a retroreflective sheeting which has a multilayer covering. Retroreflective sheet 30 which has cover sheet 31 which is adhered to pressure sensitive adhesive 32. Adhesive 32 is bonded to glass microspheres 33, which are also attached to spacecoat 34. A reflecting surface 35 is on spacecoat 34. The reflecting surface 35 is adhered to pressure sensitive adhesive 36 which is also releasably adhered to release liner 37. The retroreflective sheeting has images 38 and 39.

The images of the present invention may be prepared by using embossing or flexographic printing techniques. The images may be prepared by pressing a pattern into the retroreflective sheeting at the pressure and temperature necessary to provide the desired image.

The retroreflective sheeting can be made by procedures normally used in the industry. For example, the sheeting of the invention can be prepared by first extruding or casting a space coat layer of desired thickness on a polymer coated casting sheet and drying if necessary. The space coat layer is reheated to provide a tacky surface upon which microspheres are cascade-coated to form a monolayer of the microspheres. Typically, heat and/or pressure can be applied at this stage to facilitate microsphere embedding. The microspheres generally are embedded into the layer to a depth of about one-half of the average diameter of the microspheres. It is important that the space coat adapts a contour parallel to the microsphere surface. The topcoat is then applied over the top of the exposed and partially embedded microspheres.

The topcoating is applied by standard coating methods such as those described above. It is also possible to cast the topcoat as a separate, single layer film using these coating techniques. To achieve proper performance and coat weight thickness in each of the coating operations, technical expertise must be applied to determine the optimal solution viscosity. The application of these coating techniques is well known and is described above. Extrusion or extrusion coating are alternate methods of forming a topcoat. If required, the topcoat and the base coat layer are then subjected to an elevated temperature to dry or cure.

The polymer coated casting sheet then is stripped from the space coat layer, and a reflective layer is subsequently applied over the back surface of the space coat. For example, a reflective layer of silver or aluminum metal can be applied by vapor deposition over the back surface of the space coat. The thickness of the reflective layer depends on the particular metal used and is generally between about 500 and 1000 nanometers. The topcoat layer then can be printed (e.g. with UV radiation curable inks) to provide monocolor or multicolor images with the optional transparent overcoat.

A comparative manufacturing process not within the scope of claim 1 for enclosed bead-type retroreflective products can be used by first applying a polyurethane mixture onto a casting sheet and exposing the newly cast film to heat for solvent evaporation and urethane curing. After the film is formed, a bead bonding layer is applied and typically exposed to elevated temperatures for curing and/or evaporation of a carrier vehicle, such as solvent. Though many materials may be used for the bead bond layer, a thermoplastic polymer is preferred. The bead bond layer can then be partially cured or re-softened by the application of heat to allow cascade coated microspheres to form a monolayer of microspheres. The microspheres generally are embedded into the bead bond layer in a process that uses the application of heat and/or pressure. The space coat layer of desired thickness is then applied over the exposed microspheres. Next, the space coat and base coat layers are subjected to elevated temperatures to complete solvent drying and / or curing and to provide adequate conformation of the spacecoat to the microsphere surface.

As described above, a reflective layer is subsequently applied over the back surface of the space coat layer. After the original casting sheet is stripped from the product, the top aliphatic polyurethane layer can be printed (e.g. with UV radiation curable inks) to provide monocolor or multicolor images with the optional transparent overcoat or overlaminate film.

The retroreflective sheeting described in a previous paragraph can be provided with a pressure-sensitive adhesive construction. In this embodiment, a pressure-sensitive adhesive is coated onto a release coated liner (paper or polymer) thereafter the adhesive coated liner is pressure laminated to the exposed surface of the reflective layer. This is illustrated in Fig. 1. The release coated liner can subsequently be removed and the retroreflective sheeting can be adhesively applied to other surfaces.

Fig. 4 illustrates a comparative method of imparting the image. Heated steel roll 41 contacts the reflective side of retroreflective sheeting 42. The topcoat side of sheeting 42 is pressed against flexographic roll 43 bearing the raised impression 44 of the desired image. After being subjected to the heating and pressing step, the sheeting 42 has images.

The roll used for the image design may be any roll used for embossing or flexo printing. The advantage of the present process is that the relatively inexpensive equipment may be used for preparing the retroreflective sheeting with the image. With the use of the heated roll the present process provides a simple means to prepare a retroreflective sheeting with an image.

An alternative comparative method of imparting an image can be made by first embossing an image into the face of the polymer coated surface of a casting sheet. This can easily be done into thermoplastic materials using the techniques for embossing holographic images. For example, the sheeting of the invention can be prepared by first extruding or casting a space coat layer of desired thickness on an imaged polymer coated casting sheet and drying if necessary. The space coat layer is reheated to provide a tacky surface upon which microspheres are cascade-coated to form a monolayer of the microspheres. Typically, heat and/or pressure can be applied at this stage to facilitate microsphere embedding. The microspheres generally are embedded into the layer to a depth of about one-half of the average diameter of the microspheres. It is important that the space coat adapts a contour parallel to the microsphere surface and that the image substantially remains intact. The topcoat is then applied over the top of the exposed and partially embedded microspheres.

The topcoating is applied by standard coating methods as described above. Extrusion can be considered as an alternate method of forming a topcoat. If required, the topcoat is then subjected to an elevated temperature to dry and/or cure the mixture.

The polymer coated casting sheet then is stripped from the imaged space coat layer, and a reflective layer is subsequently applied over the back surface of the space coat as described above. The topcoat layer then can be printed as described above.

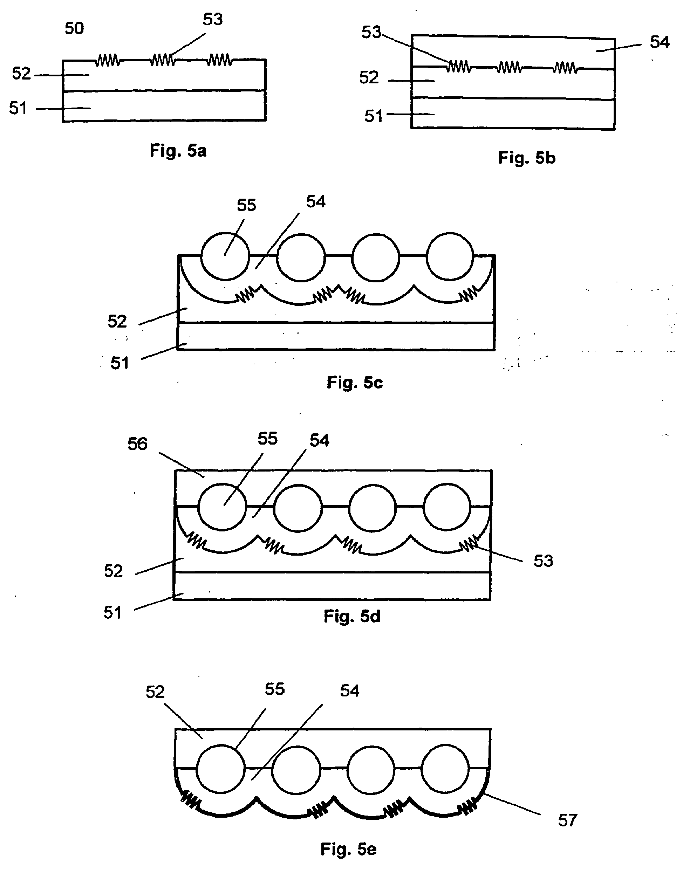

Fig. 5 illustrates an alternative comparative method of imparting the image. In Figure 5a, article 50 has a substrate 51 which is adhered to polymer film (e.g. polyethylene) 52. Heat and pressure are used to emboss an image 53, such as a holographic image into the surface of a polymer film 52. In figure 5b, spacecoat (e.g. polyvinylbutyral) 54 is coated on to polymer film 52. The image 53 in polymer 52 is replicated in the bottom surface of spacecoat 54. In figure 5c, glass microspheres 55 are embedded into spacecoat 54, the spacecoat is molded by the polymer layer 52 to a contour parallel to the microsphere surface and the image substantially remains intact. In figure 5d, a topcoat 56 is coated on the exposed surface of the glass microspheres 55. In figure 5e, the substrate 51 and polymer film 52 are removed from the construction. The spacecoat 54 with holographic images 53 is metallized as described above to form a reflective layer 57.

The method of imparting an image is made by first printing an image using a transparent polymer or a transparently colored polymer onto the face of the polymer coated surface of a casting sheet. The printing can be done using common printing techniques such as Flexography (flexo) and Rotogravure (gravure). Heat and pressure are used to press the image into the face of the polymer coated substrate so that the top of the print is substantially level with the polymer coated surface. For example, the sheeting of the invention can be prepared by first extruding or casting a space coat layer of desired thickness on an imaged polymer coated casting sheet and drying if necessary. The space coat layer is reheated to provide a tacky surface upon which microspheres are cascade-coated to form a monolayer of the microspheres. Typically, heat and/or pressure can be applied at this stage to facilitate microsphere embedding. The microspheres generally are embedded into the layer to a depth of about one-half of the average diameter of the microspheres. It is important that the space coat adapts a contour parallel to the microsphere surface and that the image substantially remains intact. The topcoat is then applied over the top of the exposed and partially embedded microspheres.

The topcoating is applied by standard coating methods as described above. Extrusion can be considered as an alternate method of forming a topcoat. If required, the topcoat and the base coat layer are then subjected to an elevated temperature to dry or cure.

The polymer coated casting sheet then is stripped from the imaged space coat layer, and a reflective layer is subsequently applied over the back surface of the space coat as described above. The printed image is non-conforming with the microspheres. The topcoat layer then can be printed (e.g. with UV radiation curable inks) to provide monocolor or multicolor images.

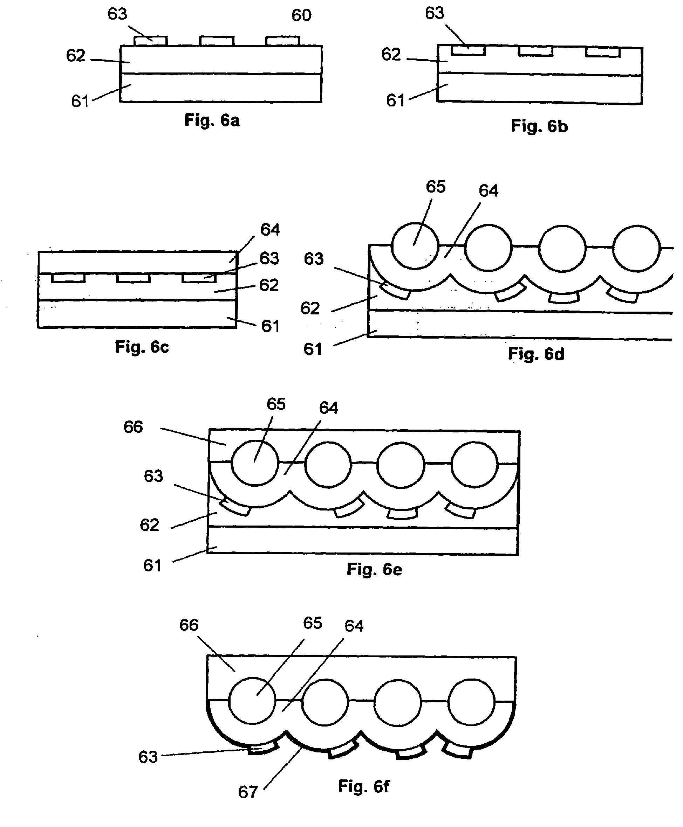

Fig. 6 illustrates an alternative method of imparting the image. In Figure 6a, article 60 has a substrate (e.g. paper) 61 which is adhered to polymer film (e.g. polyethylene) 62. An image is printed using a transparent or transparently colored polymer (e.g. polyvinylbutyral) on the surface of polymer 62. In Fig. 6b, the image 63 is embedded into polymer layer 62 using heat and pressure. In Fig. 6c, spacecoat (e.g. polyvinylbutyral) 64 is coated onto the surface of polymer film 62 containing embedded images 63. In Fig. 6d, glass microspheres 65 are embedded into spacecoat 64, the spacecoat is molded by the polymer layer 62 to a contour parallel to the microsphere surface and the image substantially remains intact. In Fig. 6e, a topcoat (e.g. aliphatic polyurethane) 66 is coated on the exposed surface of the glass microspheres 65. In Fig. 6f, the substrate 61 and polymer film 62 are removed from the construction. The spacecoat 64 with images 63 is metallized as described above to form a reflective layer 67.

While the invention has been explained in relation to its preferred embodiments, it is to be understood that various modifications thereof will become apparent to those skilled in the art upon reading the specification. Therefore, it is to be understood that the invention disclosed herein is intended to cover such modifications as fall within the scope of the appended claims.

## Claims

1. A method of making a retroreflective sheet with an image comprising the following steps:
(1) printing an image using a transparent or transparently coloured polymer onto a molding layer surface of a first assembly which comprises a molding layer and a substrate;
(2) pressing the printed image into a molding layer surface of a first assembly which comprises a molding layer and a substrate;
(3) coating a transparent polymeric spacing layer on the imaged surface of the molding layer;
(4) depositing a monolayer of transparent microsphere lenses onto the transparent polymeric spacing layer;
(5) embedding by means of heat and pressure the monolayer of microsphere lenses into the transparent polymeric spacing layer which adheres to and conforms to the second surface of said monolayer of transparent microsphere lenses displacing the molding layer but substantially keeping the image intact;
(6) covering the exposed transparent microsphere lenses with a transparent topcoat and/or transparent cover sheet;
(7) removing the molding layer and substrate assembly; and
(8) depositing a reflective layer over the exposed surface of the transparent polymeric spacing layer.

2. A method according to claim 1 in which the Vicat softening point of the molding layer is less than that of the transparent polymeric spacing layer.

3. A method according to claim 1 wherein the molding layer comprises a low, medium, or high density polyolefin.

4. A method according to claim 1 further comprising a silicone release layer between the transparent polymeric spacing layer and the molding layer.

5. A method according to claim 1 wherein the microspheres have an average refractive index in the range of 1.8 to 2.5.

6. A method according to claim 1 wherein the microspheres are glass microspheres with average diameters in a range of from 25 to 300 micrometers.

7. A method according to claim 1 wherein the spacing layer is an acrylic polymer, a polyvinyl butyral, an aliphatic urethane or a polyester.

8. A method according to claim 4 wherein the spacing layer is polyvinylbutyral.

9. A method according to any preceding claim wherein the coating thickness of the polymeric spacing layer is from 25% to 100% the average diameter of the microsphere lenses.

10. A method according to any preceding claim wherein the topcoat has a thickness from 25 to 300 micrometers.

11. A method according to any preceding claim wherein the topcoat is derived from at least one acrylic polymer, a vinyl polymer, or polyurethane.

12. A method according to any preceding claim wherein the sheet includes a topcoat and a cover sheet.

13. A method according to claim 12 wherein the topcoat is a pressure sensitive adhesive and the cover sheet is derived from at least one acrylic polymer, a vinyl polymer, or polyurethane.

14. A method according to claim 12 wherein the topcoat is a partially cured urethane and the cover sheet is derived from at least one acrylic polymer, a vinyl polymer, or polyurethane.

15. A method according to claim 12 wherein the topcoat is a heat activated adhesive and the cover sheet is derived from at least one acrylic polymer, a vinyl polymer, or polyurethane.

16. A method according to any preceding claim further comprising a pressure sensitive adhesive underlying and in contact with the reflective layer.

17. A method according to any preceding claim, wherein the layer of transparent microsphere lenses is a monolayer of transparent glass microsphere lenses, the transparent polymeric spacing layer is formed from polyvinylbutyral and the topcoat and/or cover sheet is formed from polyurethane.

18. A method according to claim 17 wherein the microspheres have an average refractive index in the range of 2.0 to 2.3.

19. A method according to claim 17 or 18 wherein the microspheres are glass microspheres with a average diameters in a range of from 30 to 120 micrometers.

20. A method according to any of claims 17 to 19 wherein the coating thickness of the polymeric spacing layer or space coat is from 35% to 75% of the average diameter of the microsphere lenses.

21. A method according to any of claims 17 to 19 wherein the topcoat has a thickness from 25 to 125 micrometers.

## Patentansprüche

1. Verfahren zur Herstellung einer retroreflektierenden Folie mit einem Bild, umfassend die folgenden Schritte:
(1) Drucken eines Bildes unter Verwendung eines transparenten oder transparent gefärbten Polymers auf eine Formungsschichtoberfläche einer ersten Baugruppe, die eine Formungsschicht und ein Substrat aufweist;
(2) Pressen des gedruckten Bildes in eine Formungsschichtoberfläche einer ersten Baugruppe, die eine Formungsschicht und ein Substrat aufweist;
(3) Beschichten einer transparenten polymeren Abstandsschicht auf der bebilderten Oberfläche der Formungsschicht;
(4) Abscheiden einer Monoschicht aus transparenten Mikrokugellinsen auf der transparenten polymeren Abstandsschicht;
(5) Einbetten der Monoschicht aus Mikrokugellinsen mittels Wärme und Druck in die transparente polymere Abstandsschicht, die an der zweiten Oberfläche der Monoschicht aus transparenten Mikrokugellinsen anhaftet und sich an diese anpasst, wodurch die Formungsschicht verdrängt wird, das Bild aber im wesentlichen intakt bleibt;
(6) Überziehen der freiliegenden transparenten Mikrokugellinsen mit einer transparenten Deckschicht und/oder einer transparenten Deckfolie;
(7) Abtragen der Baugruppe aus Formungsschicht und Substrat; und
(8) Abscheiden einer Reflexionsschicht über der freiliegenden Oberfläche der transparenten polymeren Abstandsschicht.

2. Verfahren nach Anspruch 1, wobei der Vicat-Erweichungspunkt der Formungsschicht niedriger ist als der der transparenten polymeren Abstandsschicht.

3. Verfahren nach Anspruch 1, wobei die Formungsschicht ein Polyolefin mit geringer, mittlerer oder hoher Dichte umfasst.

4. Verfahren nach Anspruch 1, das des Weiteren eine Silikontrennschicht zwischen der transparenten polymeren Abstandsschicht und der Formungsschicht aufweist.

5. Verfahren nach Anspruch 1, wobei die Mikrokugeln einen mittleren Brechungsindex in einem Bereich von 1,8 bis 2,5 aufweisen.

6. Verfahren nach Anspruch 1, wobei die Mikrokugeln Glasmikrokugeln mit mittleren Durchmessern in einem Bereich von 25 bis 300 Mikrometern sind.

7. Verfahren nach Anspruch 1, wobei die Abstandsschicht ein Acrylpolymer, ein Polyvinylbutyral, ein aliphatisches Urethan oder ein Polyester ist.

8. Verfahren nach Anspruch 4, wobei die Abstandsschicht Polyvinylbutyral ist.

9. Verfahren nach einem der vorangehenden Ansprüche, wobei die Beschichtungsdicke der polymeren Abstandsschicht 25 % bis 100 % des mittleren Durchmessers der Mikrokugellinsen beträgt.

10. Verfahren nach einem der vorangehenden Ansprüche, wobei die Deckschicht eine Dicke von 25 bis 300 Mikrometern hat.

11. Verfahren nach einem der vorangehenden Ansprüche, wobei die Deckschicht aus wenigstens einem Acrylpolymer, einem Vinylpolymer oder Polyurethan gewonnen ist.

12. Verfahren nach einem der vorangehenden Ansprüche, wobei die Folie eine Deckschicht und eine Überzugsfolie enthält.

13. Verfahren nach Anspruch 12, wobei die Deckschicht ein druckempfindlicher Klebstoff ist und die Überzugsfolie aus wenigstens einem Acrylpolymer, einem Vinylpolymer oder Polyurethan gewonnen ist.

14. Verfahren nach Anspruch 12, wobei die Deckschicht ein teilweise gehärtetes Urethan ist und die Überzugsfolie aus wenigstens einem Acrylpolymer, einem Vinylpolymer oder Polyurethan gewonnen ist.

15. Verfahren nach Anspruch 12, wobei die Deckschicht ein wärmeaktivierter Klebstoff ist und die Überzugsfolie aus wenigstens einem Acrylpolymer, einem Vinylpolymer oder Polyurethan gewonnen ist.

16. Verfahren nach einem der vorangehenden Ansprüche, das des Weiteren einen druckempfindlichen Klebstoff aufweist, der sich unter und in Kontakt mit der Reflexionsschicht befindet.

17. Verfahren nach einem der vorangehenden Ansprüche, wobei die Schicht aus transparenten Mikrokugellinsen eine Monoschicht aus transparenten Glasmikrokugellinsen ist, die transparente polymere Abstandsschicht aus Polyvinylbutyral besteht und die Deckschicht und/oder die Überzugsfolie aus Polyurethan besteht.

18. Verfahren nach Anspruch 17, wobei die Mikrokugeln einen mittleren Brechungsindex im Bereich von 2,0 bis 2,3 aufweisen.

19. Verfahren nach Anspruch 17 oder 18, wobei die Mikrokugeln Glasmikrokugeln mit mittleren Durchmessern in einem Bereich von 30 bis 120 Mikrometern sind.

20. Verfahren nach einem der Ansprüche 17 bis 19, wobei die Beschichtungsdicke der polymeren Abstandsschicht oder Abstandsbeschichtung 35 % bis 75 % des mittleren Durchmessers der Mikrokugellinsen beträgt.

21. Verfahren nach einem der Ansprüche 17 bis 19, wobei die Deckschicht eine Dicke von 25 bis 125 Mikrometern aufweist.

## Revendications

1. Procédé de fabrication d'une feuille rétroréfléchissante munie d'une image, comportant les étapes suivantes :
(1) imprimer une image à l'aide d'un polymère transparent ou coloré de façon transparente sur une surface de couche de moulage d'un premier ensemble comportant une couche de moulage et un substrat ;
(2) enfoncer l'image imprimée dans une surface de couche de moulage d'un premier ensemble comportant une couche de moulage et un substrat ;
(3) revêtir d'une couche intercalaire polymérique transparente la surface de la couche de moulage ayant reçu l'image;
(4) déposer une monocouche de lentilles microsphériques transparentes sur la couche intercalaire polymérique transparente ;
(5) encastrer, par chaleur et pression, la monocouche de lentilles microsphériques transparentes dans la couche intercalaire polymérique transparente qui adhère à la deuxième surface de ladite monocouche de lentilles microsphériques transparentes et l'épouse, déplaçant la couche de moulage mais maintenant sensiblement l'image intacte ;
(6) recouvrir les lentilles microsphériques transparentes exposées d'un revêtement superficiel transparent et/ou d'une feuille de couverture transparente ;
(7) retirer l'ensemble couche de moulage-substrat ; et
(8) déposer une couche réfléchissante par-dessus la surface exposée de la couche intercalaire polymérique transparente.

2. Procédé selon la revendication 1, où le point de ramollissement Vicat de la couche de moulage est inférieur à celui de la couche intercalaire polymérique transparente.

3. Procédé selon la revendication 1, où la couche de moulage comprend une polyoléfine à basse, moyenne ou haute densité.

4. Procédé selon la revendication 1, comportant en outre une couche antiadhésive en silicone entre la couche intercalaire polymérique transparente et la couche de moulage.

5. Procédé selon la revendication 1, où les microsphères présentent un indice de réfraction moyen situé dans la plage de 1,8 à 2,5.

6. Procédé selon la revendication 1, où les microsphères sont des microsphères en verre d'un diamètre moyen situé dans la plage de 25 à 300 micromètres.

7. Procédé selon la revendication 1, où la couche intercalaire est un polymère acrylique, un polybutyral de vinyle, un uréthane aliphatique ou un polyester.

8. Procédé selon la revendication 4, où la couche intercalaire est en polybutyral de vinyle.

9. Procédé selon l'une quelconque des revendications précédentes, où l'épaisseur de revêtement de la couche intercalaire polymérique est comprise entre 25% et 100% du diamètre moyen des lentilles microsphériques.

10. Procédé selon l'une quelconque des revendications précédentes, où le revêtement superficiel présente une épaisseur de 25 à 300 micromètres.

11. Procédé selon l'une quelconque des revendications précédentes, où le revêtement superficiel est dérivé d'au moins un polymère acrylique, d'un polymère vinylique ou de polyuréthane.

12. Procédé selon l'une quelconque des revendications précédentes, où la feuille comprend un revêtement superficiel et une feuille de couverture.

13. Procédé selon la revendication 12, où le revêtement superficiel est un adhésif sensible à la pression et la feuille de couverture est dérivée d'au moins un polymère acrylique, d'un polymère vinylique ou de polyuréthane.

14. Procédé selon la revendication 12, où le revêtement superficiel est un uréthane partiellement traité et la feuille de couverture est dérivée d'au moins un polymère acrylique, d'un polymère vinylique ou de polyuréthane.

15. Procédé selon la revendication 12, où le revêtement superficiel est un adhésif thermocollant et la feuille de couverture est dérivée d'au moins un polymère acrylique, d'un polymère vinylique ou de polyuréthane.

16. Procédé selon l'une quelconque des revendications précédentes, comportant en outre un adhésif sensible à la pression sous-jacent et en contact avec la couche réfléchissante.

17. Procédé selon l'une quelconque des revendications précédentes, où la couche de lentilles microsphériques transparentes est une monocouche de lentilles microsphériques transparentes en verre, la couche intercalaire polymérique transparente est formée de polybutyral de vinyle et le revêtement superficiel et/ou la feuille de couverture sont formés de polyuréthane.

18. Procédé selon la revendication 17, où les microsphères présentent un indice de réfraction moyen situé dans la plage de 2,0 à 2,3.

19. Procédé selon la revendication 17 ou 18, où les microsphères sont des microsphères en verre d'un diamètre moyen situé dans la plage de 30 à 120 micromètres.

20. Procédé selon l'une quelconque des revendications 17 à 19, où l'épaisseur de revêtement de la couche intercalaire polymérique ou revêtement intercalaire est comprise entre 35% et 75% du diamètre moyen des lentilles microsphériques.

21. Procédé selon l'une quelconque des revendications 17 à 19, où le revêtement superficiel présente une épaisseur de 25 à 125 micromètres.
